# EUROPEAN PATENT SPECIFICATION

(11) **EP 1 983 715 B1**
(45) Date of publication and mention of the grant of the patent: **19.05.2010**
(21) Application number: 07106581.7
(22) Date of filing: 20.04.2007
(51) Int. Cl.: H04L 29/06, H04L 12/56, H04L 12/28

(54) **Wireless network configuration**
Konfiguration eines drahtlosen Netzwerkes
Configuration de réseau sans fil

(43) Date of publication of application: 22.10.2008
(73) Proprietor: VALTION TEKNILLINEN TUTKIMUSKESKUS, 02150 Espoo (FI)
(72) Inventor: Latvakoski, Juhani, 90830 Haukipudas (FI); Väisänen, Teemu, 90570 Oulu (FI)
(74) Representative: Pykälä, Timo Tapani

(56) References cited:
- C.JELGER, C.TSCHUDIN: "Model Based Protocol Fusion for MANET-Internet Integration"[Online] 8 February 2006 (2006-02-08), XP002442766 Retrieved from the Internet: URL:http://web.archive.org/web/20060208061 853/http://cn.cs.unibas.ch/pub/doc/2006-Wo ns.pdf> [retrieved on 2007-07-04]
- S.TARKOMA,W.ZHOU,MIIKA KOMU: "HIP Applications" INFRAHIP PROJECT, [Online] 16 April 2007 (2007-04-16), XP002442767 Helsinki Institute for Information Technology, Helsinki University of Technology Retrieved from the Internet: URL:http://infrahip.hiit.fi/papers/hip_app lications.pdf> [retrieved on 2007-07-04]
- CHRISTIAN D JENSEN ET AL: "Trust-Based Route Selection in Dynamic Source Routing" TRUST MANAGEMENT LECTURE NOTES IN COMPUTER SCIENCE;;LNCS, SPRINGER-VERLAG, BE, vol. 3986, 2006, pages 150-163, XP019036669 ISBN: 978-3-540-34295-3

## Description

### Field

The invention relates to an apparatus, computer program and a method for wireless network configuration.

### Background

The problem for a computer node operating in a dynamic wireless network is that the reliability of the other nodes is unknown. It is difficult to rely on the other nodes: can valuable information be delivered to a destination node by the neighbouring nodes? And, correspondingly, if a neighbouring node transmits information/data to the computer node, should it be received and transmitted forward?

Such routing may cause problems, because the traffic load to be routed may be transmitted maliciously in order to prevent the network operation by simply overloading the network. Unwanted users/nodes may transmit wrong information to the network just to cause problems somewhere in the network. Furthermore, any forwarding of messages uses the power of the computer node, which consumes precious charging of the battery if the computer node is a wireless device. If the computer node is a wireless router, it is problematic to allow free routing for all other nodes as this may cause significant problems with routing resource usage and security. The concept of the wireless mobile ("multihop") router is not feasible, unless a solution for the described problems is found.

There are multiple ad hoc routing algorithms available, but none of them provides secure ad hoc routing in a wireless domain, as the reliable authentication of the nodes and users is not solved in a satisfactory fashion, and because the prior art solutions require the use of certification or third party servers. Additionally, some of the solutions make routing secure but not the end-to-end connection.

Relevant prior art documents dealing with routing protocols in ad hoc networks and encountering the problems mentioned above are: "Model Based Protocol Fusion for MANET-Internet Integration", C.JELGER, C.TSCHUDIN; "HIP Applications" S.TARKOMA,W.ZHOU,MIIKA KOMU; and "Trust-Based Route Selection in Dynamic Source Routing" CHRISTIAN D JENSEN ET AL.

### Brief description

The present invention seeks to provide an improved apparatus, computer program, and method.

According to an aspect of the present invention, there is provided an apparatus as specified in claim 1.

According to another aspect of the present invention, there is provided a computer program as specified in claim 27.

According to another aspect of the present invention, there is provided a method as specified in claim 14.

### List of drawings

Embodiments of the present invention are described below, by way of example only, with reference to the accompanying drawings, in which
Figures 1, 2 and 3 illustrate a network environment and its operation;
Figure 4 illustrates a HIP base exchange;
Figure 5 illustrates a simplified structure of the apparatus;
Figures 6 and 7 illustrate integration of SAODV (Simplified Ad-hoc On-demand Distance Vector) and HIP (Host Identity Protocol);
Figure 8 illustrates a method; and
Figures 9, 10 and 11 illustrate various route request and route reply message structures.

### Description of embodiments

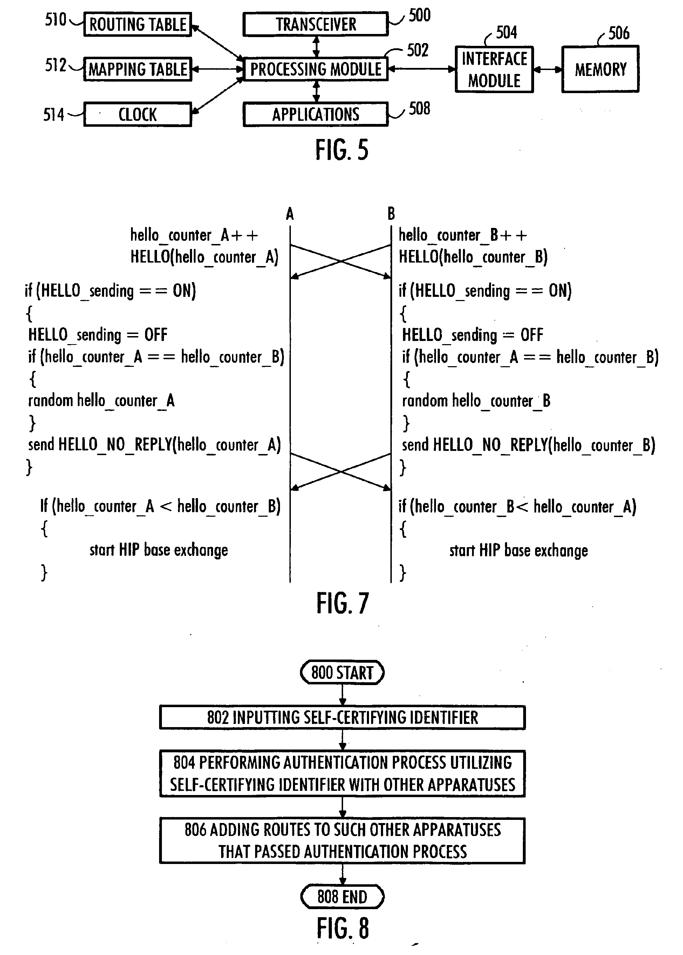

Figure 5 illustrates a simplified structure of an apparatus. The apparatus may be a computing node. The computing node may be placed fixedly. The fixed computing node may be a router or a server computer, for example. The computing node may also be mobile. The mobile computing node may be a portable wireless mobile communication device operating with or without a subscriber identification module (SIM), including, but not limited to, the following types of devices: a mobile phone, smartphone, personal digital assistant (PDA), or handset.

The apparatus may be implemented as an electronic digital computing device, which may comprise a working memory (RAM), a central processing unit (CPU), and a system clock. The CPU may comprise a set of registers, an arithmetic logic unit, and a control unit. The control unit is controlled by a sequence of program instructions transferred to the CPU from the RAM. The control unit may contain a number of microinstructions for basic operations. The implementation of microinstructions may vary, depending on the CPU design. The program instructions may be coded by a programming language, which may be a high-level programming language, such as C, Java, etc., or a low-level programming language, such as a machine language, or an assembler. The electronic digital computing device may also have an operating system, which may provide system services to a computer program written with the program instructions.

The apparatus comprises a transceiver 500 configured to wirelessly communicate with other apparatuses. A wireless connection may be implemented with the wireless transceiver 500 operating according to the GSM (Global System for Mobile Communications), GPRS (General Packet Radio Service), WCDMA (Wideband Code Division Multiple Access), WLAN (Wireless Local Area Network) or Bluetooth® standard, or any other suitable standard/non-standard wireless communication means.

Moreover, the apparatus comprises an interface module 504 configured to input a self-certifying identifier of the apparatus. The self-certifying identifier refers to an identifier that may be verified without consulting or trusting a third party, such as an external certification authority. The self-certifying identifier may be a string managed manually, and its association to a public key may be verified mathematically. Such identities of apparatuses may be applied to enable secure network configuration and route discovery. A user may use the same self-certifying identifier in different apparatuses.

The interface module 504 may be configured to obtain the self-certifying identifier of the apparatus from a memory 506. The memory 506 may be an internal part of the apparatus, or an external part that communicates by wired or wireless means with the interface module 504. The memory 506 may be a portable small device containing the self-certifying identifier. The portability of the memory 506 makes it easy to use the same self-certifying identifier in different apparatuses of the user. Additionally, the memory 506 may contain system configuration parameters of the person who is starting to use the apparatus being attached to the network. These parameters may be used as a starting point for network configuration. The memory 506 may be an USB (Universal Serial Bus) flash memory, or some other portable type of memory.

The apparatus also comprises a processing module 502, coupled with the wireless transceiver 500 and the interface module 504. The processing module 502 is configured to perform an authentication process utilizing the self-certifying identifier of the apparatus with other apparatuses within a range of the transceiver 500. The processing module is also configured to add routes to such other apparatuses that passed the authentication process. The routes may be added to a routing table 510.

The interface module 504 may be configured to input information on self-certifying identifiers of friendly other apparatuses. "Friendly" here refers to trustworthy other apparatuses, i.e. apparatuses that are deemed safe for routing and/or communication purposes. The apparatus and the other friendly apparatuses may belong to the same group where the apparatuses trust each other. Information on the self-certifying identifiers of the friendly other apparatuses may reside in the memory 506, and it may be in the form of a list. The list may be updated periodically or when needed in order to keep it up-to-date, i.e. friendly other apparatuses may be added to the list or removed from the list. The update may be performed with any suitable mechanism, such as wireless data transfer. The processing module 502 may be configured to utilize the information on the self-certifying identifiers of the friendly other apparatuses in the authentication process. The processing module 502 may check whether the self-certifying identifier transmitted by the other apparatus belongs to a friendly other apparatus utilizing the information on the self-certifying identifiers of the friendly other apparatuses.

An embodiment provides a computer program comprising program instructions which, when loaded into the apparatus, constitute the foregoing modules 502, 504.

The computer program may be in source code form, object code form, or in some intermediate form, and it may be stored in some sort of carrier, which may be any entity or device capable of carrying the program. Such carriers include a record medium, computer memory, read-only memory, electrical carrier signal, telecommunications signal, and software distribution package, for example. Depending on the processing power needed, the computer program may be executed in a single electronic digital computer or it may be distributed amongst a number of computers.

The modules 502, 504 may also be implemented as one or more integrated circuits, such as application-specific integrated circuits ASIC. Other hardware embodiments are also feasible, such as a circuit built of separate logic components. A hybrid of these different implementations is also feasible. When selecting the method of implementation, a person skilled in the art will consider the requirements set for the size and power consumption of the apparatus, necessary processing capacity, production costs, and production volumes, for example.

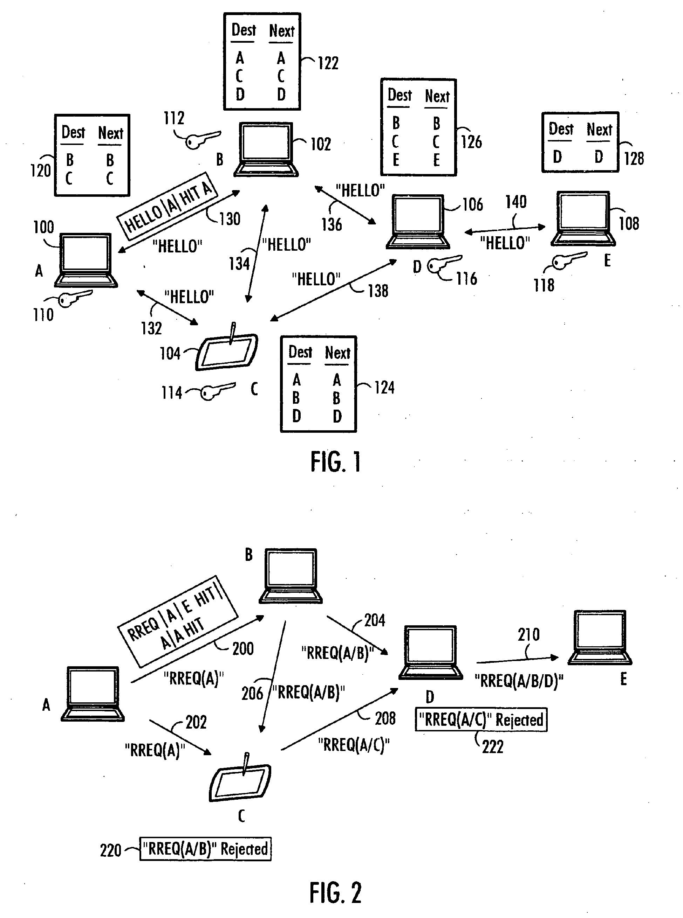

An example of a network environment is illustrated in Figures 1, 2 and 3. In this example AODV or SAODV is used as the routing algorithm, but the invention is not restricted to it as also other suitable routing algorithms may be used.

A Host Identity Tag (HIT) may be used as the self-certifying identifier when using IP Version 6 both in AODV and SAODV. HIT may be a 128-bit representation for a Host Identity. It may be created by taking a cryptographic hash over the corresponding Host Identifier. There are two advantages of using a hash over using the Host Identifier in protocols. First, its fixed length makes protocol coding easier and also allows better management of the packet size cost. Second, it presents the identity in a consistent format to the protocol independent of the cryptographic algorithms used.

A Local Scope Identifier (LSI) may be used as the self-certifying identifier when using IP Version 4 in AODV. LSI may be a 32-bit localized representation for a Host Identity. The purpose of an LSI is to facilitate using Host Identities in existing protocols and APIs. LSI's advantage over HIT is its size.

The memory 110, 112, 114, 116, 118 may contain the self-certifying identifier and possibly also system configuration parameters of the person using the computer node 100, 102, 104, 106, 108. The memory 110, 112, 114, 116, 118 may also contain the identities of other group members. For ease of reference, each node 100, 102, 104, 106, 108 will be referenced by a letter (A, B, C, D and E).

As node A is turned on, it reads its own self-certifying identifier from the memory 110, and then it starts to join the dynamic ad hoc network, for instance according to the AODV or SAODV routing protocol.

**Table 1: The Hello message of node A**

| Type | Source | Source HIT |
|---|---|---|
| HELLO | A's IPv6 | A's HIT |

When node A is joining to the network, it may transmit a "hello A" as a multicast message to the surrounding environment. The "hello A" message may contain, besides the normal ad hoc routing protocol information elements, also the source Host Identifier Tag HIT and Internet Protocol Version 6 (IPv6) source address of node A as shown in Table 1. The source HIT is included to enable identification of nodes and users, and the source IPv6 is used for making and updating routing tables.

The processing module 502 may be configured to place the self-certifying identifier of the apparatus 100 in the hello message, and to multicast the hello message to the other apparatuses 102, 104 within the range of the wireless transceiver 500 as a part of the authentication process. The processing module 502 may also be configured to place an Internet protocol address of the apparatus 100 in the hello message.

Nodes C and B are monitoring the multicast channel, and receive the "hello A" messages. The HIT that is received in the "hello A" message is used to identify the sender according to the following rules:
1. If the receiving node (node B and/or node C in this case) is aware of node A's HIT, and knows that the HIT belongs to the allowed group (= node A is a friend), node adds the received node A's current IPv6 address to its routing table as illustrated in Table 2.
2. If the receiving node (node B and/or node C in this case) is not aware of node A's HIT, node does not add A's IPv6 address to the routing table, because it is not sure about its friendliness.
3. The applied HIT may be a host identity tag of node or a host identity tag of the group (group HIT).

**Table 2: The routing table in nodes B and C**

| Dest | Next |
|---|---|
| A's IPv6 | A's IPv6 |

Nodes B and C are also joining the network, they will send a "hello B" message, illustrated in Table 3, and a "hello C" message, illustrated in Table 4, as a multicast message to the surrounding environment.

**Table 3: The Hello message of node B**

| Type | Source | Source HIT |
|---|---|---|
| HELLO | B's IPv6 | B's HIT |

**Table 4: The Hello message of node C**

| | | |
|---|---|---|
| Type | Source | Source HIT |
| HELLO | C's IPv6 | C's HIT |

Node A receives the hello messages from nodes B and C. Then node A updates its routing table according to the previously defined rules. The resulting routing table of node A is illustrated in Table 5.

**Table 5: The routing table of node A**

| Dest | Next |
|---|---|
| B's IPv6 | B's IPv6 |
| C's IPv6 | C's IPv6 |

When the network configuration starts, node A is aware of the both node B's and node C's preconfigured HITs. During the novel hello procedure, it finds out node B's and node C's IPv6 addresses. As a result, it can build the HIT-IPv6 address mapping table visualized in Table 6. The HIT-IPv6 address mapping table is also built in nodes B and C.

**Table 6: HIT/IPv6 address mapping table in node A**

| IPv6 address | HIT |
|---|---|
| B's IPv6 | B's HIT |
| C's IPv6 | C's HIT |

The processing module 502 may be configured to maintain a mapping table 512 including self-certifying identifier/Internet protocol address pairs of the other apparatuses, and to remove such other apparatuses that do not pass the authentication process from the mapping table 512. Additionally, the self-certifying identifiers that pass the authentication process may also be added to the routing table.

Finally, nodes D and E will also join the network by multicasting "hello D" and "hello E" messages. The hello messages 130, 132, 134, 136, 138, 140 are thus exchanged between every adjacent node. Completed routing tables 120, 122, 124, 126, 128 of each node A, B, C, D and E are also illustrated in Figure 1.

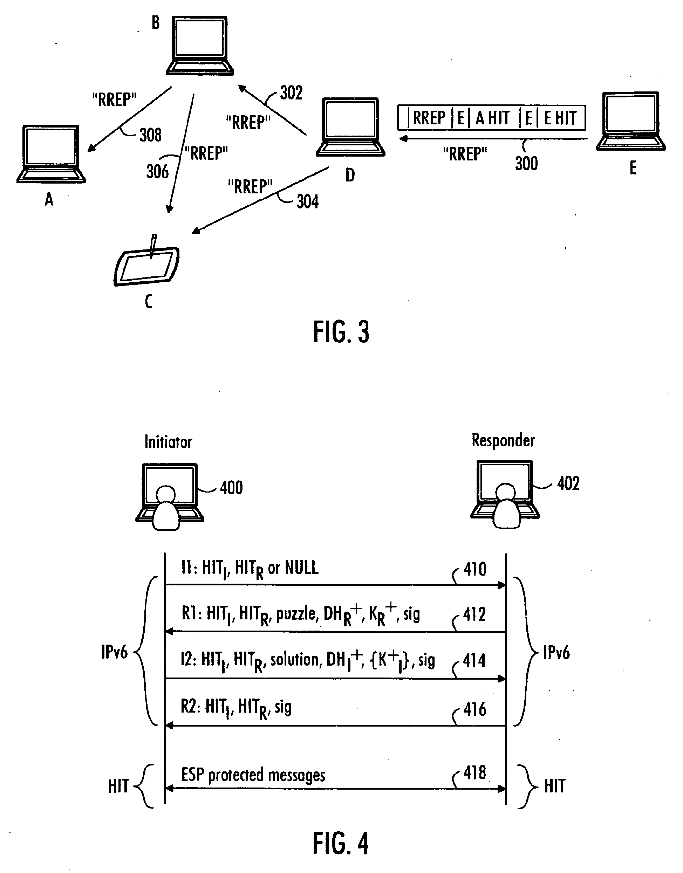

If the neighbour node is a friend, the HIP base exchange may be executed to create assurance that the peers possess the private key corresponding to their Hls (Host Identifier), which are the public keys. The HIP base exchange is illustrated in Figure 4 and Table 7. The processing module 502 may be configured to utilize a host identity protocol base exchange as a part of the authentication process.

The HIP base exchange creates a pair of Internet Protocol Security (IPsec) Encapsulation Payload (ESP) Security Associations (SA), one in each direction.

**Table 7: Messages in the HIP base exchange**

| | | | |
|---|---|---|---|
| | | I ---> | Directory: lookup R |
| | | I <--- | Directory: return R's address and HI/HIT |
| 410 | I1 | I ---> R | Hi, here is my I1, let us talk with HIP |
| 412 | R1 | R ---> I | Ok, here is my R1, handle this HIP cookie |
| 414 | I2 | I ---> R | Computing, here is my counter I2 |
| 416 | R2 | R ---> I | Ok, let us finish HIP with my R2 |
| 418 | | I <---> R | ESP protected data |

The HIP base exchange is known technology, which is shortly overviewed in the following. An I1 message containing the initiator's 400 HIT starts 410 the HIP base exchange. The responder 402 has formed parts of R1 messages beforehand, and when it receives I1 message, it selects one pre-computed R1, completes it, and sends 412 it to the initiator 400. The R1 message includes a puzzle, a Diffie-Hellman start-up, the receiver's public HI in clear text, a Diffie-Hellman public key, and other Diffie-Hellman parameters.

When the initiator 400 receives the R1 message, it calculates the answer to the puzzle, calculates a session key and sends 414 an I2 message to the responder. This part uses the most processing power and it makes DoS (Denial of Service) attacks more difficult in the HIP, because the HIP base exchange takes more processing power from the initiator 400 than the responder 402 and the responder 402 uses little calculation before the I2 message. The I2 message includes the answer to the puzzle, Diffie-Hellman parameters, the initiator's public HI, SPI (Security Parameter Index) and HI encrypted with the session key.

When the responder 402 receives the I2 message, it checks that the puzzle is solved correctly, calculates the session key, authenticates the initiator and makes the session state. Then it sends 416 an R2 message including the responder's SPI and signature. The signature makes it possible for the initiator 400 to finish authentication.

The HIP does not change the form of IPv4 or IPv6 packets. Packets 418 are encrypted with ESP and they are similar to normal IPsec ESP protected packets. ESP enables the receiver node to validate and confirm that they really have been sent by another known node without caring about the source and destination addresses of the packets. SAs are connected to public keys and the destination is just used for routing. The source is only needed during base exchange and when IP addresses are updated.

After the HIP base exchange has been carried out between nodes A-B and A-C, the result is interpreted according to the following rules:
1. If the HIP base exchange is successful, the IPsec SAs and IPsec ESP tunnel is created between the HITs of A and B, and between the HITs of A and C.
2. If the HIP base exchange is not successful, node A is probably not the correct A, and nodes B and C remove node A's information from their routing tables and HIT-IPv6 address mapping tables.

As a result from the network configuration, each node of the ad hoc network has HIT-lPv6 address mapping table (like Table 6) in their memory. Based on this table, the node knows easily the friendly neighbour nodes, on which the node can rely in the sense that they belong to the allowed group. The reliability is ensured by the application of cryptographic identities together with the HIP protocol.

Next, referring to Figure 2, a route discovery mechanism is explained. The starting point for the route discovery is execution of network configuration, described earlier. As a result from the network configuration, there are secure IPsec tunnels between neighbour nodes, i.e. A-B, A-C, B-C, B-D, C-D and D-E.

The processing module 502 may be configured to fetch at least one route from the routing table 510, and to unicast an encrypted route request including a self-certifying identifier of a destination apparatus through the at least one route.

The processing module 502 may also be configured to place the self-certifying identifier of the apparatus in the route request.

The route discovery is initiated by node A that would like to communicate with node E. Node A knows the HIT of the destination node E, but not its current IPv6 address and the route to node E. For finding the route to node E, node A sends a modified Route Request (RREQ) 200, 202 message to all of reliable neighbour nodes, which are found in the HIT-IPv6 address mapping table. This means that the RREQ is sent to the group of reliable neighbour nodes, but not to all possible neighbouring nodes. The RREQ message structure may be modified from the AODV RREQ message structure. The novelty in the modified RREQ message structure is indication of the destination and source as HITs. Another essential difference compared with AODV is that RREQ is sent to the group of neighbour nodes over the IPsec tunnels between the sender and the receiving neighbour node. In the standard AODV, the RREQ is multicast to all neighbouring nodes.

When a node receives the RREQ message, it checks the source and destination HITs by the following rules:
1. If the destination HIT is the receiver node HIT, i.e. the destination node E receives the RREQ message, then node E checks whether node A is a friendly node by comparing A's HIT to the preconfigured ones stored in the key.
   a. If the source node A is a friendly node, then node E stores node A's IPv6 address in its routing table, updates the HIT-lPv6 address mapping table temporarily, and starts route reply process.
   b. If the source node A is not a friendly node, then node E sends a Router Error (RERR) message with a relevant error code optionally returned to the source.
2. If the destination and source HIT indicates that they are friendly nodes, then the RREQ message is sent forward to the reliable group of neighbour nodes, which are in the HIT-lPv6 address mapping table as described earlier.
3. If either the destination or the source are unreliable nodes, then the RREQ message is not sent forward, and an RERR message with a relevant error code is optionally returned to the source node.

As illustrated in Figure 2, node B transmits the RREQ messages to nodes C and D. Node C rejects 220 the RREQ message 206 from node B, as node C has already received the RREQ message 202 from node A. Node C transmits the RREQ message 208 to node D, but node D rejects 222 the RREQ message from node C as node D has already received the RREQ message 204 from node B. Finally, node D transmits the RREQ message 210 to node E.

The route reply process is illustrated in Figure 3. The destination node E replies by sending 300 a Route Reply (RREP) message, in order to indicate that the route between nodes A and E has been found out. The processing module 502 may be configured to receive an encrypted route reply through the at least one route, and add a route to the destination apparatus, including the address of the other apparatus that transmitted the route reply, in the routing table 510. It is to be noted that RREQ, RREP and RERR are all unicast through secure tunnels. The route request, the route reply and the route error messages refer to a general mechanism for finding routes, i.e. they are not to be understood as only restricted to AODV.

The processing module 502 may also be configured to measure time from unicasting the route request, possibly with a clock 514, and to add a route to the destination apparatus, including an address of an routing server of a static network, in the routing table, if an encrypted route reply was not received in a predetermined time period after unicasting the route request. The routing server may be a so-called rendezvous server.

The RREP message is sent 302, 304, 306, 308 back via the routes according to the last hop field over the ESP protected channels between the neighbour nodes. The essential difference compared with AODV is that the RREP message is sent to the last hop node over the IPsec tunnels between the sender and the receiving neighbour node. In the standard AODV, the RREP messages are not protected at all. When node A receives the RREP message, it updates the HIT-lPv6 address mapping table with node E's IPv6 address.

The processing module 502 may be configured to perform an authentication process utilizing the self-certifying identifier of the apparatus with the destination apparatus through the route to the destination apparatus.

Then node A executes the HIP base exchange with node E, and follows the following rules:
1. If the HIP base exchange is successful, IPsec SAs and IPsec ESP tunnel are created between HITs of node A and node E. After this, the communication between node A and node E can proceed in a secure way.
2. If the HIP base exchange is not successful, then node A removes node E from its HIT-lPv6 address mapping table and routing table. And node E does the same with node A, because there is no trust relationship between nodes A and E.

After the successful network configuration and route discovery processes, user traffic can be sent between the source and destination nodes (A and E in this case) in a secure way. The processing module 502 may be configured to exchange encrypted data with the destination apparatus through the route to the destination apparatus. As illustrated in Figure 5, the apparatus may include applications 508 that need to exchange data through the created secure connection, in our example the route being A-B-D-E.

With the above-described functionality, a computer node in the ad hoc network knows which of the neighbourhood nodes are reliable. If the node does not have a direct connection with the destination node, it finds the route to it through a reliable chain of nodes, and establishes a secure end-to-end communication channel with it. A computer node working as a mobile router only routes the traffic of the friendly nodes. The possibility that misbehaving nodes disturb operation of the network is eliminated or lowered significantly. The computer node battery is saved, because only traffic of the friendly nodes is routed. The solution decreases the load of the computer network. The scalability of the solution is better compared with the traditional AODV based ad hoc routing.

Next, a method will be described with reference to Figure 8. The method relates to wireless network configuration and routing. The method starts in 800.

In 802, a self-certifying identifier of the apparatus is inputted into the apparatus.

In 804, the apparatus performs an authentication process utilizing the self-certifying identifier of the apparatus with other apparatuses within the wireless communication range of the apparatus.

In 806, routes to such other apparatuses that passed the authentication process are added to a routing table.

The basic network configuration part of the method ends in 808. The above-mentioned embodiments of the apparatus may be applied to the method as well, in order to add embodiments, as described in the appended claims, to the network configuration part of the method, as well as to the routing part of the method.

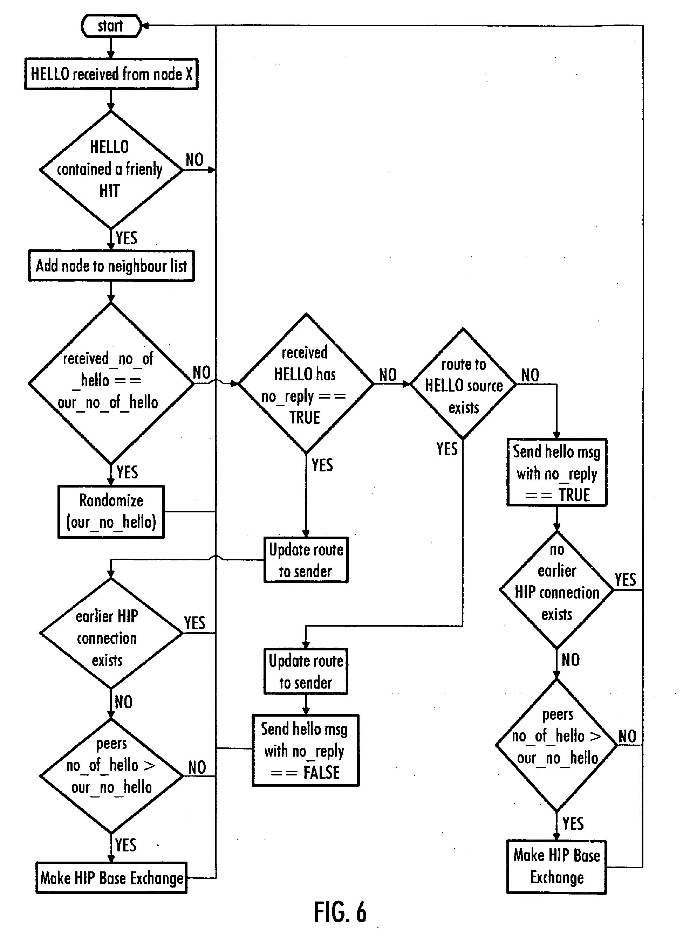

Next, with reference to Figures 6 and 7, some further embodiments of the invention will be described. When a node is turned on, it starts to send continuous hello packets to an IPv6 global broadcast address. A node has a configuration file for determining friends. This file lists all friendly HITs and it is read every time an SAODV message is processed. As explained earlier, the configuration file may be updated in order to keep the list of friends up-to-date. If the node sending hello messages with a non-friendly HIT wishes to start a negotiation, the receiving node compares the received HIT to its list and ignores this message and all the following messages sent by this node.

Figure 6 gives a detailed run-through of the hello procedure. The number of hello (no_of_hello) is a counter which every node has as a static variable and it is increased by one every time a node sends a hello message. The need for this variable comes from the need of mutual agreement of which one of the nodes should start HIP base exchange. This procedure makes sure that the node which has been longer on the network does not have to start the base exchange because HIP handshake is built in a way that it is always computationally harder for the initiator to complete the handshake. This way, denial-of-service -type of attacks are easily avoided when the initiator has to solve puzzles which take CPU power to solve.

Figure 7 gives a pseudo-code explanation of agreeing the initiator for the HIP base exchange. After a successful exchange of hello messages and executing base exchanges, the network has been configured. When compared to a normal SAODV, routing tables may also hold routing information about the node's HITs in addition to normal IPv6 addresses. This change is needed for unicast routing of SAODV messages using HITs.

As SAODV is a reactive protocol, it sends packets on demand and finds the route by flooding the network with RREQ packets. The sending is normally performed by using a global broadcast address which every node listens to. This same method is also used for sending hello messages.

This insecure way of multicasting routing packets to everyone has been changed into a unicast model which will take advantage of the available HIP connections between the nodes. The basic operation logic is that if a packet is destined to a node to where a route is not known, an RREQ is sent to all neighbour nodes. If the destination is one of the neighbours, they send back an RREP packet, and a route may be established between the nodes. However, if the destination is not a neighbour, they forward the RREQ to all their neighbours except to the node where the packet came from. This way the network is flooded and eventually the destination is found.

Let us suppose that we have a wireless ad hoc network of Figure 1. Now, if node A wants to send some data to node D, it must first find a route to node D with RREQ.

The nodes in the ad hoc network may also be able to connect to hosts which are in a static network and also the opposite way. The link to the static network is provided by optional gateway nodes. These hosts have a normal connection to ad hoc network but also static routes to other networks.

When a node sends a packet whose destination is in a static network, this packet can be differentiated from the other packets by the network prefix of the destination IPv6 address. When a gateway receives an RREQ whose destination prefix belongs to a static network, it will reply with an RREP. The RREP will have as a sender the address which was in the destination of the RREQ and the source HIT will be a null address. With this mechanism, the nodes in the ad hoc network will gain access to the static network when IPv6 addresses are considered.

However, if the destination searched for is a HIT, the operation of the gateway is different. As it does not know the HITs of the static network's nodes and therefore does not know if the searched HIT is in the static network, it cannot reply with an RREP containing the RREQ's destination HIT. Instead, it will just forward the RREQ as it does with other RREQs.

The problem is solved by using a timer in the original sender node. When it sends an RREQ searching for a certain HIT, it will add a new entry to a table called rreq-list. This entry contains an id for the RREQ (rreq_id), the searched HIT, and a timer started when the RREQ is sent. When the timer is running, the RREQs are forwarded in the network but because the searched HIT belongs to a host, which is in the static network, the RREP is never sent. This is a sign for the sender and as the timer runs out, a function is run which will map the HIT to the HIP Rendezvous Server's (RVS) IPv6 address. Now, all the sender has to do is to find a route to RVS's IPv6 address and then start HIP base exchange with the owner of the HIT the sender was trying to reach.

If the RVS relays the HIT to a node which is in a different static network than the RVS, there is a problem when the ad hoc networks node should send back the I2 packet of HIP base exchange. The node's routing table does not have an entry for the new network and therefore the kernel will not process the packet at all.

To overcome this, a function is added to the gateway code so that it will keep a table which has knowledge of which nodes of different static networks have sent packets to which nodes of the ad hoc network. If the gateway notices, while forwarding packets to a node, that the sender of the packet belongs to a new network for the destination, it will first send an RREQ to the destination and substitute its own address with the original address of the sender. This has the effect that once the destination receives the RREQ, it adds the source of the packet to its routing tables and this enables the ad hoc networks node to make a HIP base exchange with a node from an unknown static network without any manual setup.

If the connection is started from a static network, two different approaches are used. The first approach is used when a node in the static network wants to send an IPv6 packet to one of the nodes in the ad hoc network. When the packet reaches a gateway node, it will send an RREQ to the destination host. This is done for two reasons. First, if the gateway does not know the route to the destination in the ad hoc network, it must find it out before it can forward the packet to the proper next hop node. Secondly, if the destination has not received any packets from this network before, again an RREQ must be sent in order to add a route to the destination hosts routing tables. If these two conditions are met, the gateway node can freely forward the packet towards the destination node.

The second approach is used when a static networks node needs to establish a connection with a node belonging to an ad hoc network using HITs. This requires that the responder node has earlier registered itself to the RVS. Also, the initiator must map the responder's HIT to RVS because the HITs are not routable in the static network. After the mapping, the I1 is redirected towards the destination and the same gateway procedures are performed in the same way as explained earlier.

RREP packets are sent as unicast traffic in SAODV so there was no need to modify that behaviour. However, those packets were delivered insecurely so SAODV's default way of handling RREPs was altered. Now they are sent with a HIT always in the destination field. Example message formats for HELLO, RREQ and RREP will next be described.

The HELLO message format may be as follows:

```
 Hello->pkt_type  = HELLO;
 Hello->no_reply  = no_reply_n;
 Hello->hit   = local_hit;
 Hello->no_of_hello = no_of_hello;
 
 
 typedef struct { //multicast
   u_int8_t  pkt_type;
   u_int8_t  no_reply;
   in6_addr_t hit;
   u_int32_t  no_of_hello;
 } Chello;
```

The RREQ message format may be as follows:

```
 rreq->pkt_type   = RREQ;
 rreq->dest_ipaddr   = dest_ipaddr;
 rreq->source_ipaddr   = own_ipaddr;
 rreq->source_hit   = own_hit;
 rreq->last_ipv6  = own_ipaddr;
 rreq->rreq_id   = no_of_rreq;
 rreq->hop_count     = RREQ_HOP_COUNT;
 rreq->seq_no    = own_rreq_seq_no;
 
 
 typedef struct { //unicast
   u_int8_t  pkt_type;
   in6_addr_t   dest_ipaddr;
   in6_addr_t   source_ipaddr;
   in6_addr_t   source_hit;
   in6_addr_t   last_ipv6;
   u_int8_t  seq_no;
   u_int8_t  hop_count;
   u_int32_t  rreq_id;  } Crreq;
```

The RREP message format may be as follows:

```
  rrep->pkt_type  = RREP;
  rrep->source_ipaddr  = own_ipaddr;
  rrep->source_hit    = own_hit;
  rrep->last_ipv6  = own_ipaddr;
  rrep->dest_ipaddr = dest_ipaddr;
  rrep->seq_num    = seq_num;
  rrep->rreq_id    = rreq_id;
 
 
 typedef struct { //unicast
 u_int8_t   pkt_type;
  in6_addr_t  source_ipaddr;
  in6_addr_t  source_hit;
  in6_addr_t  dest_ipaddr;
  in6_addr_t  last_ipv6;
 u_int8_t    seq_num;
 u_int32_t  rreq_id;
 } Crrep;
```

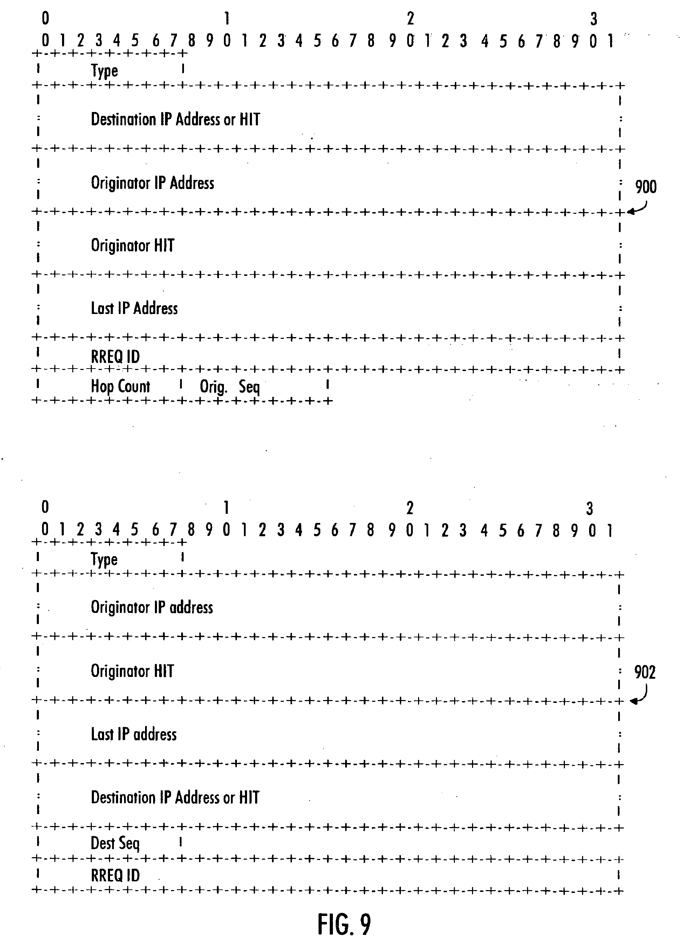

In Figure 9 it is further illustrated how a special RREQ message 900 and a special RREP message 902 may be formed when integrating SAODV with HIP. The fields of the RREQ message 900 are explained in the following.

Destination IP Address or HIT: The IP address or HIT of the destination for which a route is desired.

Originator IP Address: The IP address of the node which originated the RREQ.

Originator HIT: The HIT of the node which originated the RREQ.

Last IP Address: Last IP Address carries the IPv6 address of the last host which has processed this message. It is needed because when the RREQ is sent over the HIP connection, the receiver sees the packet coming from a HIT and not from an IPv6 address.

RREQ ID: RREQ ID is added to enable connections to static networks. When a node sends an RREQ searching for a certain HIT, it will add a new entry to a table called rreq-list. This entry contains an identifier for the RREQ (rreq_id), the searched HIT and a timer started when the RREQ is sent. When the timer is running, the RREQs are forwarded in the network but because the searched HIT belongs to a host which is in the static network, the RREP is never sent.

Hop Count: The number of hops from the Originator IP Address to the node handling the request.

Originator Sequence Number: The current sequence number to be used in the route entry pointing towards the originator of the RREQ.

The fields of the RREP message 902 are explained in the following.

Originator IP Address: The IP address of the node which originated the RREQ for which the route is supplied.

Originator HIT: The HIT of the node which originated the RREQ.

Last IP Address: Last IP Address carries the IPv6 address of the last host which has processed this message.

Destination IP Address or HIT: The IP address or HIT of the destination for which a route supplied.

Destination Sequence Number: The destination sequence number associated with the route.

RREQ ID: RREQ ID is added to enable connections to static networks.

Notice that the old next hop field of SAODV has been dropped as it has no use anymore because the next hop is checked every time in the SAODV's own routing table when a packet is sent or forwarded.

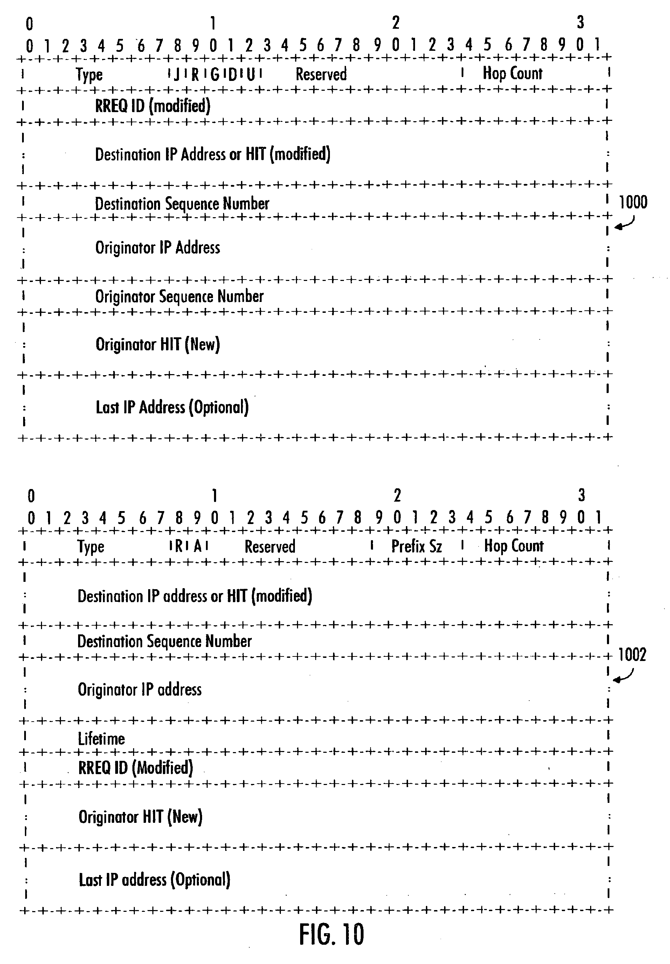

Figure 10 illustrates other possible formats for the RREQ message 1000 and the RREP message 1002 when integrating AODV with HIP in an IP Version 6 environment. The new or modified fields are in bold font: RREQ ID, Destination HIT, Originator HIT, and Last IP Address.

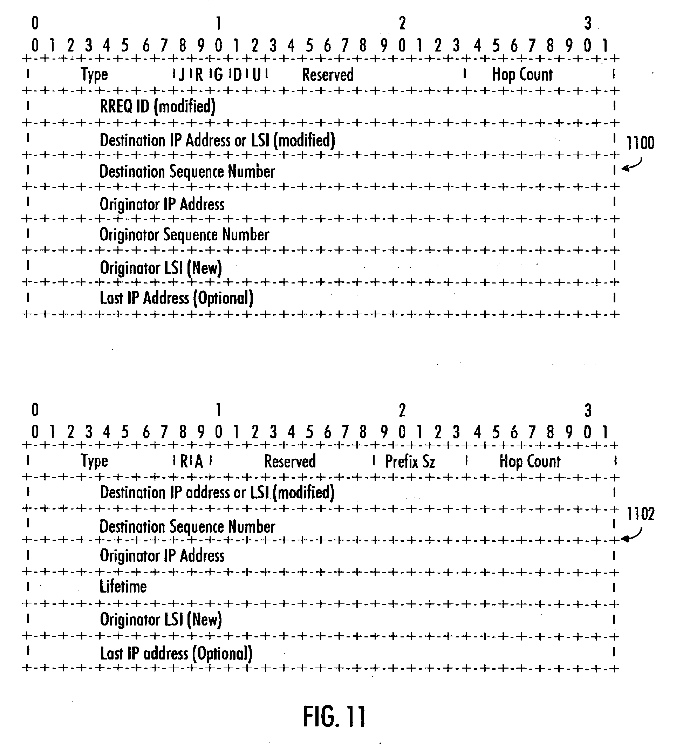

Figure 11 illustrates other possible formats for the RREQ message 1100 and the RREP message 1102 when integrating AODV with HIP in an IP Version 4 environment. The new or modified fields are in bold font: RREQ ID Destination LSI, Originator LSI, and Last IP Address. Even though the invention has been described above with reference to an example according to the accompanying drawings, it is clear that the invention is not restricted thereto but can be modified in several ways within the scope of the appended claims.

## Claims

1. An apparatus comprising:
a transceiver (500) configured to wirelessly communicate with other apparatuses;
an interface module (504) configured to input a self-certifying identifier of the apparatus, the self-certifying identifier referring to an identifier that may be verified without consulting or trusting a third party; and
a processing module (502), coupled with the wireless transceiver (500) and the interface module (504), configured to perform an authentication process utilizing the self-certifying identifier of the apparatus with other apparatuses within a range of the transceiver (500);
**characterized in that** the processing module (502) is further configured to add routes to such other apparatuses that passed the authentication process to a routing table (510), to fetch at least one route from the routing table (510), and to unicast an encrypted route request including a self-certifying identifier of a destination apparatus through the at least one route.

2. The apparatus of claim 1, wherein the interface module (504) is further configured to input information on self-certifying identifiers of friendly other apparatuses, and processing module (502) is further configured to utilize the information on the self-certifying identifiers of the friendly other apparatuses in the authentication process.

3. The apparatus of claim 1 or 2, wherein the processing module (502) is further configured to place the self-certifying identifier of the apparatus in a hello message, and to multicast the hello message to the other apparatuses within the range of the wireless transceiver (500) as a part of the authentication process.

4. The apparatus of claim 3, wherein the processing module (502) is further configured to place an Internet protocol address of the apparatus in the hello message.

5. The apparatus of any preceding claim, wherein the processing module (502) is further configured to maintain a mapping table (512) including self-certifying identifier/Internet protocol address pairs of the other apparatuses, and to remove such other apparatuses that do not pass the authentication process from the mapping table (512).

6. The apparatus of any preceding claim, wherein the processing module (502) is further configured to receive an encrypted route reply through the at least one route, and add a route to the destination apparatus, including the address of the other apparatus that transmitted the route reply, to the routing table (510).

7. The apparatus of any preceding claim 1 to 5, wherein the processing module (502) is further configured to measure time from unicasting the route request, and if an encrypted route reply was not received in a predetermined time period after unicasting the route request, to add a route to the destination apparatus, including an address of a routing server of a static network, to the routing table (510).

8. The apparatus of any preceding claim 1 to 5, wherein the processing module (502) is further configured to place the self-certifying identifier of the apparatus in the route request.

9. The apparatus of any preceding claim, wherein the processing module (502) is further configured to perform an authentication process utilizing the self-certifying identifier of the apparatus with the destination apparatus through the route to the destination apparatus.

10. The apparatus of claim 9, wherein the processing module (502) is further configured to exchange encrypted data with the destination apparatus through the route to the destination apparatus.

11. The apparatus of any preceding claim, wherein the processing module (502) is further configured to operate in a dynamic network environment.

12. The apparatus of any preceding claim, wherein the processing module (502) is further configured to utilize a host identity tag of a host identity protocol as the self-certifying identifier.

13. The apparatus of any preceding claim, wherein the processing module (502) is further configured to utilize a host identity protocol base exchange as a part of the authentication process.

14. A method comprising:
inputting (802) a self-certifying identifier of the apparatus into the apparatus, the self-certifying identifier referring to an identifier that may be verified without consulting or trusting a third party; and
the apparatus performing (804) an authentication process utilizing the self-certifying identifier of the apparatus with other apparatuses within wireless communication range of the apparatus;
**characterized in that** the method further comprises:
adding (806) routes to such other apparatuses that passed the authentication process to a routing table;
fetching at least one route from the routing table; and
unicasting an encrypted route request including a self-certifying identifier of a destination apparatus through the at least one route.

15. The method of claim 14, further comprising:
inputting information on self-certifying identifiers of friendly other apparatuses; and
utilizing the information on the self-certifying identifiers of the friendly other apparatuses in the authentication process.

16. The method of claim 14 or 15, further comprising:
placing the self-certifying identifier of the apparatus in a hello message; and
multicasting the hello message to the other apparatuses within the wireless communication range of the apparatus as a part of the authentication process.

17. The method of claim 16, further comprising:
placing an Internet protocol address of the apparatus in the hello message.

18. The method of any preceding claim 14 to 17, further comprising:
maintaining a mapping table including self-certifying identifier/Internet protocol address pairs of the other apparatuses;
removing such other apparatuses that do not pass the authentication process from the mapping table.

19. The method of any preceding claim 14 to 18, further comprising:
receiving an encrypted route reply through the at least one route; and
adding a route to the destination apparatus, including the address of the other apparatus that transmitted the route reply, to the routing table.

20. The method of any preceding claim 14 to 18, further comprising:
measuring time from unicasting the route request; and
adding a route to the destination apparatus, including an address of an gateway node to a static network, to the routing table, if an encrypted route reply was not received in a predetermined time period after unicasting the route request.

21. The method of any preceding claim 14 to 18, further comprising:
placing the self-certifying identifier of the apparatus in the route request.

22. The method of any preceding claim 14 to 21, further comprising:
performing an authentication process utilizing the self-certifying identifier of the apparatus with the destination apparatus through the route to the destination apparatus.

23. The method of claim 22, further comprising:
exchanging encrypted data with the destination apparatus through the route to the destination apparatus.

24. The method of any preceding claim 14 to 23, further comprising:
operating in a dynamic network environment.

25. The method of any preceding claim 14 to 24, further comprising:
utilizing a host identity tag of a host identity protocol as the self-certifying identifier.

26. The method of any preceding claim to 25, further comprising:
utilizing a host identity protocol base exchange as a part of the authentication process.

27. A computer program comprising code means adapted to perform the steps of method claims 14-26.

## Patentansprüche

1. Ein Gerät aufweisend:
einen Sendeempfänger (500), der so konfiguriert ist, dass er wireless mit weiteren Geräten kommuniziert;
ein Schnittstellen-Modul (504), das so konfiguriert ist, dass es dem Gerät einen selbst-zertifizierenden Idenktifikator eingibt, wobei der selbst-zertifizierende Idenktifikator ein Identifikator ist, der verifiziert werden kann, ohne einen Dritten heranzuziehen oder diesem zu vertrauen; und
ein Verarbeitungsmodul (502), das mit dem Wireless-Sendeempfänger (500) und dem Schnittstellen-Modul (504) verbunden ist, das so konfiguriert ist, dass es unter Verwendung des selbst-identifizierenden Identifikators einen Authentifizierungsprozess des Geräts mit anderen Geräten in Reichweite des Sendeempfängers (500) durchführt,
**dadurch gekennzeichnet, dass** das Verarbeitungsmodul (502) weiterhin so konfiguriert ist, um Routen zu anderen Geräten, die den Authentifizierungsprozess durchlaufen haben, zu einer Routing-Tabelle (510) hinzuzufügen, mindestens eine Route von der Routing-Tabelle (510) abzurufen und per Unicast eine verschlüsselte Routen-Anfrage, die einen selbst-zertifizierenden Identifikator des Zielgeräts umfasst, über diese mindestens eine Route zu senden.

2. Gerät aus Anspruch 1, wobei das Schnittstellen-Modul (504) weiterhin so konfiguriert ist, um Informationen auf selbst-zertifizierenden Identifikatoren anderer befreundeter Geräte einzugeben, und das Verarbeitungsmodul (502) weiterhin so konfiguriert ist, um die Information auf den selbst-zertifizierenden Identifikatoren anderer befreundeter Geräte im Authentifizierungsprozess zu verwenden.

3. Gerät gemäß Anspruch 1 oder 2, wobei das Verarbeitungsmodul (502) so konfiguriert ist, um den selbst-identifizierenden Identifikator des Geräts in einer Hello-Nachricht zu platzieren und diese Hello-Nachricht per Multicast zu den anderen Geräten in der Reichweite des Wireless-Sendeempfängers (500) als Teil des Authentifizierungsprozesses zu versenden.

4. Gerät gemäß Anspruch 3, wobei das Verarbeitungsmodul (502) weiterhin so konfiguriert ist, um die Internet-Protocol-Adresse (IP-Adresse) des Geräts in der Hello-Nachricht zu platzieren.

5. Gerät nach einem der vorhergehenden Ansprüche, wobei das Verarbeitungsmodul (502) weiterhin so konfiguriert ist, um eine Mapping-Tabelle (512) einschließlich von selbst-zertifizierendem Identifikator/IP-Adresse-Paaren der anderen Geräte aufrecht zu erhalten und andere Geräte, die den Authentifizierungsprozess nicht bestehen, aus der Mapping-Tabelle zu entfernen.

6. Gerät nach einem der vorhergehenden Ansprüche, wobei das Verarbeitungsmodul (502) weiterhin so konfiguriert ist, um eine verschlüsselte Routen-Antwort durch die mindestens eine Route zu empfangen und eine Route zum Zielgerät zur Routing-Tabelle (510) hinzuzufügen, einschließlich der Adresse des anderen Geräts, das die Routen-Antwort gesendet hat.

7. Gerät nach einem der vorhergehenden Ansprüche 1 bis 5, wobei das Verarbeitungsmodul (502) weiterhin so konfiguriert ist, um die Zeit der Routen-Anfrage, die per Unicast gesendet wurde, zu messen und, falls die verschlüsselte Routen-Antwort nicht innerhalb einer vorbestimmten Zeit-Periode, nachdem die Anfrage per Unicast gesendet wurde, empfangen wird, eine Route zum Zielgerät hinzuzufügen, einschließlich einer Adresse eines Routen-Servers eines statischen Netzwerks zur Routing-Tabelle (510).

8. Gerät nach einem der vorhergehenden Ansprüche 1 bis 5, wobei das Verarbeitungsmodul (502) weiterhin so konfiguriert ist, um den selbst-zertifizierenden Identifikator des Geräts in der Routen-Anfrage zu platzieren.

9. Gerät nach einem der vorhergehenden Ansprüche, wobei das Verarbeitungsmodul (502) weiterhin so konfiguriert ist, um einen Authentifizierungsprozess durchzuführen, der den selbst-zertifizierenden Identifikator des Geräts mit dem Zielgerät über die Route des Zielgeräts verwendet.

10. Gerät nach Anspruch 9, wobei das Verarbeitungsmodul (502) weiterhin so konfiguriert ist, verschlüsselte Daten mit dem Zielgerät über die Route zum Zielgerät auszutauschen.

11. Gerät nach einem der vorhergehenden Ansprüche, wobei das Verarbeitungsmodul (502) weiterhin so konfiguriert ist, um an einer dynamischen Netzwerk-Umgebung zu operieren.

12. Gerät nach einem der vorhergehenden Ansprüche, wobei das Verarbeitungsmodul (502) weiterhin so konfiguriert ist, um ein Host-Identifizierungs-Tag eines Host-Identifizierungs-Protokolls als den selbst-zertifizierenden Identifikator zu verwenden.

13. Gerät nach einem der vorhergehenden Ansprüche, wobei das Verarbeitungsmodul (502) weiterhin so konfiguriert ist, um einen Austausch über die Basis eines Host-Identifizierungs-Protokolls als Teil des Authentifizierungsprozesses vorzunehmen.

14. Verfahren, bei dem
ein selbst-zertifizierender Identifikator eines Geräts in das Gerät eingegeben (802) wird, wobei sich der selbst-zertifizierende Identifikator auf einen Identifikator bezieht, der verifiziert werden kann, ohne einen Dritten heranzuziehen oder diesem zu vertrauen; und
das Gerät einen Authentifizierungsprozess unter Verwendung eines selbst-zertifizierenden Identifikators des Geräts mit anderen Geräten innerhalb der Wireless-Kommunikations-Reichweite durchführt (804),
**dadurch gekennzeichnet, dass** bei dem Verfahren weiterhin
Routen zu solchen anderen Geräten, die den Authentifizierungsprozess bestanden haben, zu einer Routing-Tabelle hinzugefügt (806) werden;
mindestens eine Route von der Routing-Tabelle abgerufen wird und
per Unicast eine verschlüsselten Routen-Anfrage, die einen selbst-zertifizierenden Identifikator des Zielgeräts enthält, über diese mindestens eine Route gesendet wird.

15. Verfahren nach Anspruch 14, bei dem weiterhin
eine Information über selbst-zertifizierende Identifikatoren anderer befreundeter Geräte eingegeben und
die Information über selbst-zertifizierende Identifikatoren von anderen befreundeten Geräten im Authentifizierungsprozess verwendet wird.

16. Verfahren nach den Ansprüchen 14 oder 15, bei dem weiterhin der selbst-zertifizierende Identifikator des Geräts in einer Hello-Nachricht platziert wird; und
die Hello-Nachricht per Multicast an die anderen Geräte innerhalb der Wireless-Kommunikations-Reichweite als Teil des Authentifizierungsprozesses versendet wird.

17. Verfahren nach Anspruch 16, bei dem weiterhin die Internet-Protocol-Adresse des Geräts in der Hello-Nachricht platziert wird.

18. Verfahren nach einem der vorhergehenden Ansprüche 14 bis 17, bei dem weiterhin eine Mapping-Tabelle (512) einschließlich der selbst-zertifizierendem Identifikator/IP-Adress-Paare der anderen Geräte aufrechterhalten wird sowie diejenigen anderen Geräte aus der Mapping-Tabelle, die den Authentifizierungsprozess nicht bestehen, entfernt werden.

19. Verfahren nach einem der vorhergehenden Ansprüche 14 bis 18, bei dem weiterhin eine verschlüsselte Routen-Antwort durch die mindestens eine Route empfangen und eine Route zum Zielgerät einschließlich der Adresse des anderen Geräts, das die Routen-Antwort gesendet hat, zur Routing-Tabelle hinzugefügt wird.

20. Verfahren nach einem der vorhergehenden Ansprüche 14 bis 18, bei dem weiterhin die Zeit für die Routen-Anfrage, die per Unicast gesendet wurde, gemessen wird und eine Route zum Zielgerät einschließlich einer Adresse eines Gateway-Knotens zu einem statischen Netzwerk zur Routing-Tabelle hinzugefügt wird, falls die verschlüsselte Routen-Antwort nicht innerhalb einer vorbestimmten Zeit-Periode, nachdem die Anfrage per Unicast gesendet wurde, empfangen wurde.

21. Verfahren nach einem der vorhergehenden Ansprüche 14 bis 18, bei dem weiterhin der selbst-zertifizierende Identifikator des Geräts in der Routen-Anfrage platziert wird.

22. Verfahren nach einem der vorhergehenden Ansprüche 14 bis 21, bei dem weiterhin ein Authentifizierungsprozess unter Verwendung des selbst-zertifizierenden Identifikators des Geräts mit dem Zielgerät über die Route zum Zielgerät durchgeführt wird.

23. Verfahren nach Anspruch 22, bei dem weiterhin verschlüsselte Daten mit dem Zielgerät über die Route zum Zielgerät ausgetauscht werden.

24. Verfahren nach einem der vorhergehenden Ansprüche 14 bis 23, bei dem weiterhin in einer dynamischen Netzwerk-Umgebung gearbeitet wird.

25. Verfahren nach einem der vorhergehenden Ansprüche 14 bis 24, bei dem weiterhin ein Host-Identifizierungs-Tags eines Host-Identifizierungs-Protokolls als selbst-zertifizierender Identifikator verwendet wird.

26. Verfahren nach einem der vorhergehenden Ansprüche bis 25, bei dem weiterhin ein Austausch mit der Basis eines Host-Identifizierungs-Protokolls als Teil des Authentifizierungsprozesses angewandt wird.

27. Ein Computer-Programm, aufweisend Code-Mittel,die geeignet sind, die Schritte der Verfahrensansprüche 14 bis 26 durchzuführen.

## Revendications

1. Dispositif, comprenant :
un émetteur- récepteur (500) configuré pour communiquer sans fil avec d'autres dispositifs,
un module d'interface (504) configuré pour appliquer en entrée un identificateur à auto-certification du dispositif, l'identificateur à auto-certification faisant référence à un identificateur qui peut être vérifié sans consulter ou faire confiance à une tierce partie, et
un module de traitement (502), relié à l'émetteur- récepteur sans fil (500) et au module d'interface (504), configuré pour exécuter un traitement d'authentification en utilisant l'identificateur à auto-certification du dispositif avec d'autres dispositifs dans une portée de l'émetteur- récepteur (500),
**caractérisé en ce que** le module de traitement (502) est en outre configuré pour ajouter des routes vers les autres dispositifs qui ont réussi le traitement d'authentification à une table de routage (510), pour récupérer au moins une route dans la table de routage (510), et pour diffuser à un destinataire unique une demande de route cryptée comprenant un identificateur à auto-certification d'un dispositif de destination par le biais de la au moins une route.

2. Dispositif selon la revendication 1, dans lequel le module d'interface (504) est en outre configuré pour appliquer en entrée des informations sur des identificateurs à auto-certification d'autres dispositifs amis, et le module de traitement (502) est en outre configuré pour utiliser les informations sur les identificateurs à auto-certification des autres dispositifs amis pour le traitement d'authentification.

3. Dispositif selon la revendication 1 ou 2, dans lequel le module de traitement (502) est en outre configuré pour placer l'identificateur à auto-certification du dispositif dans un message d'accueil, et pour diffuser à des destinataires multiples le message d'accueil vers les autres dispositifs dans la portée de l'émetteur- récepteur sans fil (500) en tant que partie du traitement d'authentification.

4. Dispositif selon la revendication 3, dans lequel le module de traitement (502) est en outre configuré pour placer une adresse de protocole Internet du dispositif dans le message d'accueil.

5. Dispositif selon l'une quelconque des revendications précédentes, dans lequel le module de traitement (502) est en outre configuré pour entretenir une table de mappage (512) comprenant des paires identificateur à auto-certification/adresse de protocole Internet des autres dispositifs, et pour supprimer de la table de mappage (512) les autres dispositifs qui ne réussissent pas le traitement d'authentification.

6. Dispositif selon l'une quelconque des revendications précédentes, dans lequel le module de traitement (502) est en outre configuré pour recevoir une réponse de route cryptée par le biais de la au moins une route, et ajouter une route jusqu'au dispositif de destination, comprenant l'adresse de l'autre dispositif qui a transmis la réponse de route, à la table de routage (510).

7. Dispositif selon l'une quelconque des revendications précédentes 1 à 5, dans lequel le module de traitement (502) est en outre configuré pour mesurer le temps depuis la diffusion à un destinataire unique de la demande de route, et si une réponse de route cryptée n'a pas été reçue dans un intervalle de temps prédéterminé après la diffusion à un destinataire unique de la demande de route, pour ajouter une route jusqu'à un dispositif de destination, comprenant une adresse d'un serveur de routage d'un réseau statique, à la table de routage (510).

8. Dispositif selon l'une quelconque des revendications 1 à 5, dans lequel le module de traitement (502) est en outre configuré pour placer l'identificateur à auto-certification du dispositif dans la demande de route.

9. Dispositif selon l'une quelconque des revendications précédentes, dans lequel le module de traitement (502) est en outre configuré pour exécuter un traitement d'authentification en utilisant l'identificateur à auto-certification du dispositif avec le dispositif de destination par le biais de la route jusqu'au dispositif de destination.

10. Dispositif selon la revendication 9, dans lequel le module de traitement (502) est en outre configuré pour échanger des données cryptées avec le dispositif de destination par le biais de la route jusqu'au dispositif de destination.

11. Dispositif selon l'une quelconque des revendications précédentes, dans lequel le module de traitement (502) est en outre configuré pour fonctionner dans un environnement de réseau dynamique.

12. Dispositif selon l'une quelconque des revendications précédentes, dans lequel le module de traitement (502) est en outre configuré pour utiliser une étiquette d'identité hôte d'un protocole d'identité hôte en tant que l'identificateur à auto-certification.

13. Dispositif selon l'une quelconque des revendications précédentes, dans lequel le module de traitement (502) est en outre configuré pour utiliser un échange à base de protocole d'identité hôte en tant que partie du traitement d'authentification.

14. Procédé comprenant les étapes consistant à :
appliquer en entrée (802) un identificateur à auto-certification du dispositif dans le dispositif, l'identificateur à auto-certification faisant référence à un identificateur qui peut être vérifié sans consulter ou faire confiance à une tierce partie, et
le dispositif exécutant (804) un traitement d'authentification en utilisant l'identificateur à auto-certification du dispositif avec d'autres dispositifs dans la portée de communication sans fil du dispositif,
**caractérisé en ce que** le procédé comprend en outre les étapes consistant à :
ajouter (806) des routes les autres dispositifs qui ont réussi le traitement d'authentification à une table de routage,
récupérer au moins une route à partir de la table de routage, et
diffuser à un destinataire unique une demande de route cryptée comprenant un identificateur à auto-certification d'un dispositif de destination par le biais de la au moins une route.

15. Procédé selon la revendication 14, comprenant en outre les étapes consistant à :
appliquer en entrée des informations sur les identificateurs à auto-certification d'autres dispositifs amis, et
utiliser les informations sur les identificateurs à auto-certification des autres dispositifs amis dans le traitement d'authentification.

16. Procédé selon la revendication 14 ou 15, comprenant en outre les étapes consistant à :
placer l'identificateur à auto-certification du dispositif dans un message d'accueil, et
diffuser à des destinataires multiples le message d'accueil vers les autres dispositifs dans la portée de communication sans fil du dispositif en tant que partie du traitement d'authentification.

17. Procédé selon la revendication 16, comprenant en outre les étapes consistant à :
placer une adresse de protocole Internet du dispositif dans le message d'accueil.

18. Procédé selon l'une quelconque des revendications précédentes 14 à 17, comprenant en outre les étapes consistant à :
entretenir une table de mappage comprenant des paires identificateur à auto-certification/adresse de protocole Internet des autres dispositifs,
supprimer de la table de mappage les autres dispositifs qui ne réussissent pas le traitement d'authentification.

19. Procédé selon l'une quelconque des revendications précédentes 14 à 18, comprenant en outre les étapes consistant à :
recevoir une réponse de route cryptée par le biais de la au moins une route, et
ajouter une route jusqu'au dispositif de destination, comprenant l'adresse de l'autre dispositif qui a transmis la réponse de route, à la table de routage.

20. Procédé selon l'une quelconque des revendications 14 à 18, comprenant en outre les étapes consistant à :
mesurer un temps depuis la diffusion à un destinataire unique de la demande de route, et
ajouter une route jusqu'au dispositif de destination, comprenant une adresse d'un noeud de passerelle vers un réseau statique, à la table de routage, si une réponse de route cryptée n'a pas été reçue dans un intervalle de temps prédéterminé après la diffusion à un destinataire unique de la demande de route.

21. Procédé selon l'une quelconque des revendications précédentes 14 à 18, comprenant en outre l'étape consistant à :
placer l'identificateur à auto-certification du dispositif dans une demande de route.

22. Procédé selon l'une quelconque des revendications précédentes 14 à 21, comprenant en outre l'étape consistant à :
exécuter un traitement d'authentification en utilisant l'identificateur à auto-certification du dispositif avec le dispositif de destination par le biais de la route jusqu'au dispositif de destination.

23. Procédé selon la revendication 22, comprenant en outre l'étape consistant à :
échanger des données cryptées avec le dispositif de destination par le biais de la route jusqu'au dispositif de destination.

24. Procédé selon l'une quelconque des revendications précédentes 14 à 23, comprenant en outre l'étape consistant à :
opérer dans un environnement de réseau dynamique.

25. Procédé selon l'une quelconque des revendications précédentes 14 à 24, comprenant en outre l'étape consistant à :
utiliser une étiquette d'identité hôte d'un protocole d'identité hôte en tant que l'identificateur à auto-certification.

26. Procédé selon l'une quelconque des revendications précédentes jusqu'à 25, comprenant en outre l'étape consistant à :
utiliser un échange à base de protocole d'identité hôte en tant que partie du traitement d'authentification.

27. Programme informatique comprenant un moyen de code conçu pour exécuter les étapes des revendications de procédé 14 à 26.
